# EUROPÄISCHE PATENTSCHRIFT

(11) **EP 2 492 144 B1**
(45) Veröffentlichungstag und Bekanntmachung des Hinweises auf die Patenterteilung: **02.04.2014**
(21) Anmeldenummer: 11400017.7
(22) Anmeldetag: 23.02.2011
(51) Int. Cl.: B60R 1/07

(54) **Aussenrückblickspiegelanordnung für ein Kraftfahrzeug**
External rear-view mirror assembly for a motor vehicle
Agencement de rétroviseur extérieur pour un véhicule automobile

(43) Veröffentlichungstag der Anmeldung: 29.08.2012
(73) Patentinhaber: SMR Patents S.à.r.l., 1653 Luxembourg (LU)
(72) Erfinder: Liesener, Alf, 73614 Schorndorf (DE)
(74) Vertreter: Weber-Bruls, Dorothée

(56) Entgegenhaltungen:
- EP-A1- 0 064 421
- DE-A1- 1 530 861
- DE-A1- 19 538 770

## Beschreibung

Die Erfindung betrifft eine Außenrückblickspiegelanordnung für ein Kraftfahrzeug.

Eine Außenrückblickspiegelanordnung für ein Kraftfahrzeug besteht im Wesentlichen aus einem zur kraftfahrzeugseitigen Anordnung vorgesehenen Spiegelfuß und einem an dem Spiegelfuß angeordneten, ein Spiegelglas beherbergenden Spiegclkopf.

Durch DE 1 755 577 B ist eine Außenrückblickspiegelanordnung für ein Kraftfahrzeug mit einem durch Befestigung an der Karosserie eines Kraftfahrzeugs zur kraftfahrzeugseitigen Anordnung vorgesehenen Spiegelfuß und einem daran angeordneten, das Spiegelglas tragenden Spiegelkopf bekannt. Das Spiegelglas ist unverstellbar fest vom Spiegelkopf beherbergt. Spiegelfuß und Spiegelkopf sind vermittels eines Kugelgelenks gelenkig miteinander verbunden, so dass der Spiegelkopf mit dem von und gegenüber diesem unbeweglich beherbergten Spiegelglas in einer gewünschten, vom Fahrer des 20 Kraftfahrzeugs individuell einstellbaren, beispielsweise von Körpergröße und Sitzposition des Fahrers abhängigen Verstelllage gegenüber dem Spiegelfuß einstellbar ist. Darüber hinaus ist der vermittels des Kugelgelenks am Spiegelfuß gelenkig angeordnete Spiegelkopf gegenüber dem Spiegelfuß aus einer Betriebsstellung in eine Abklappstellung und umgekehrt verschwenkbar. Die Vornahme der Einstellung der individuellen Verstelllage ebenso wie die Vornahme des Verschwenkens des Spiegelkopfs aus der Betriebs- in die Anklappstellung und umgekehrt ist dabei von Hand vorgesehen, indem der Spiegelkopf von außerhalb des Kraftfahrzeugs oder vom Kraftfahrzeuginnenraum durch ein geöffnetes Seitenfenster hindurch gegriffen und in die gewünschte Position verbracht wird.

Durch DE 1 815 368 B ist eine Außenrückblickspiegelanordnung für ein Kraftfahrzeug mit einem Spiegelfuß und einem ein Spiegelglas tragenden Spiegelkopf bekannt. Bei diesem sind der Spiegelkopf und der Spiegelfuß starr und ungelenkig fest miteinander verbunden. Ebenso ist das Spiegelglas unverstellbar fest vom Spiegelkopf beherbergt. Um eine Einstellung einer individuellen Verstelllage vornehmen zu können, ist ein Kugelgelenk zur gelenkigen karosserieseitigen Anordnung des Spiegelfußes vorgesehen. Zur Vornahme einer Einstellung einer individuellen Verstelllage des Spiegelfußes mit dem an diesem starr angeordneten Spiegelkopf und dem von und gegenüber diesem unbeweglich beherbergten Spiegelglas ist ein vom Kraftfahrzeuginnenraum aus betätigbarer Verstellhebel vorgesehen, der vermittels eines Gestanges zur Übertragung der Bewegung des Verstellhebels auf den Spiegelfuß mit diesem verbunden ist.

Durch DE 41 41 657 A1 ist darüber hinaus eine Außenrückblickspiegelanordnung für ein Kraftfahrzeug bekannt, bei der ein das Spiegelglas fest und unverstellbar gegenüber diesem tragender Spiegelkopf vermittels eines Kugelgelenks gelenkig an einem Spiegelfuß befestigt ist. Eine spiegelkopfseitige Partie des Kugelgelenks wird von dem Spiegelkopf umfasst. Bei dieser Außenrückblickspiegelanordnung ist die Vornahme der Einstellung der individuellen Verstelllage ebenso wie die Vornahme des Verschwenkens des Spiegelkopfs aus der Betriebs- in die Anklappstellung und umgekehrt von Hand vorgesehen, indem der Spiegelkopf von außerhalb des Kraftfahrzeugs oder vom Kraftfahrzeuginnenraum durch ein geöffnetes Seitenfenster hindurch gegriffen und in die gewünschte Position verbracht wird.

Durch DE 196 01 429 C2 ist eine Außenrückblickspiegelanordnung für ein Kraftfahrzeug bekannt, bei der ein das Spiegelglas fest und unverstellbar gegenüber diesem tragender Spiegelkopf gelenkig über einen Spiegelhals an einem Spiegelfuß befestigt ist. Der Spiegelfuß ist als ein zur gelenkigen karosserieseitigen Anordnung um eine erste Gelenkachse vorgesehener Bügel ausgeführt. Um diese erste Gelenkachse kann der Spiegelfuß aus einer Betriebs- in eine Anklappstellung und umgekehrt verschwenkt werden. Am freien Ende des Bügels ist der Spiegelkopf, der im Wesentlichen nur aus dem Spiegelglas und einem Verbindungsmittel zur gelenkigen Befestigung am freien Ende des Bügels besteht, um eine zweite Gelenkachse gelenkig angeordnet. Das Verbindungsmittel ist so ausgeführt, dass der Spiegelkopf gegenüber dem Bügel um die zweite Gelenkachse verschwenkbar ist. Die erste und zweite Gelenkachse sind dabei weder parallel, noch schneiden sie sich. Zur Vornahme einer Einstellung einer individuellen Verstelllage des Spiegelglases kann der Spiegelfuß um die erste Gelenkachse gegenüber der Karosserie des Kraftfahrzeugs und der Spiegelkopf um die zweite Gelenkachse gegenüber dem Spiegelfuß verschwenkt werden. Auch hier erfolgt die Vornahme der Einstellung der individuellen Verstelllage ebenso wie die Vornahme des Verschwenkens des Spiegelkopfs aus der Betriebs- in die Anklappstellung und umgekehrt von Hand, indem der Spiegelkopf von außerhalb des Kraftfahrzeugs oder vom Kraftfahrzeuginnenraum durch ein geöffnetes Seitenfenster hindurch gegriffen und in die gewünschte Position verbracht wird.
Aus EP 0 064 421 A1 ist eine nicht gattungsgemäße Außenrückspiegelanordnung für ein Kraftfahrzeug bekannt, bei der zwischen Spiegelkopf und kraftfahrzeugseitiger Anordnung lediglich eine Gelenkachse vorgesehen ist, der kein elektromotorischer Verstellantrieb zugeordnet ist.

Aus DE 195 38 770 A1 ist eine nicht gattungsgemäße Außenrückspiegelanordnung für ein Kraftfahrzeug bekannt, bei der zwischen Spiegelkopf und kraftfahrzeugseitiger Anordnung lediglich eine Gelenkachse vorgesehen ist.

Schließlich ist aus der DE 15 30 861 eine nicht gattungsgemäße Außenrückblickspiegelanordnung für ein Kraftfahrzeug bekannt, bei der der Spiegelkopf nicht am Spiegelfuß angeordnet ist und bei der der Spiegelkopf nicht von einer Betriebsstellung in eine Anklappstellung überführbar ist.

Nachteilig an diesen bekannten Außenrückblickspiegelanordnungen ist, dass sie weder den heutigen Ansprüchen an Komfort, noch den heutigen Sicherheitsanforderungen entsprechen. Bezüglich der heutigen Ansprüche an Komfort sei auf die Vornahme der Einstellung der individuellen Verstelllage sowie die Vornahme des Verschwenkens aus der Betriebs- in die Anklappstellung und umgekehrt verwiesen, die heutzutage nicht mehr von Hand akzeptabel ist.

Im Hinblick auf Komfort sei darüber hinaus auf eine Umfeldbeleuchtung verwiesen, welche zumindest bei geöffneter Fahrzeugtür eine Beleuchtung des Bodens neben dem Kraftfahrzeug bei Dunkelheit vorsieht, die heutzutage gerne durch Unterbringung von Ausstiegsleuchten im Spiegelkopf verwirklicht wird. Die heutigen Sicherheitsanforderungen von Außenrückblickspiegelanordnungen sehen beispielsweise vor, dass ein vermittels einer Außenrückblickspiegelanordnung einsehbarer Bereichs der Fahrzeugumgebung frei von einer Beeinträchtigung durch Vibrationen des Spiegelglases sein muss, sei es hervorgerufen durch Fahrtwind, Fahrbahnunebenheiten oder Antriebsstrang, und dass ein ausreichender Schutz anderer Verkehrsteilnehmer gewährleistet sein muss, insbesondere durch ein zuverlässiges Beiklappen des Spiegelkopfs sowohl in als auch entgegen der Fahrtrichtung bei Einwirkung einer äußeren Kraft auf den Spiegelkopf. Dabei dürfen die starr am Kraftfahrzeug verbleibenden Teile durch gesetzliche Anforderungen vorgegebene zulässige Mindestkantenradien nicht unterschreiten. Die Weiterentwicklung der gesetzlichen Anforderungen betrifft außerdem auch Sichtbarkeitsanforderungen für Lichtfunktionen von Kraftfahrzeugen, beispielsweise einer Wiederholblinklichtfunktion, die zum Teil nur durch Unterbringung beispielsweise von Wiederholblinkleuchten im Außenrückblickspiegel erfüllt werden können. Um den heutigen Ansprüchen nachzukommen, sind moderne Außenrückblickspiegelanordnungen für Kraftfahrzeuge bekannt, die aus einem zur kraftfahrzeugseitigen Anordnung vorgesehenen Spiegelfuß und einem an diesem um eine Gelenkachse verschwenkbar angeordneten Spiegelkopf mit einem gegenüber dem Spiegelkopf um zwei Schwenkachsen verstellbar angeordneten Spiegelglas bestehen.

Der Spiegelfuß einer solchen Außenrückblickspiegelanordnung umfasst einen Ständer, der mit seinem ersten Ende zur kraftfahrzeugseitigen Befestigung und an seinem zweiten Ende zur gelenkigen Verbindung mit dem Spiegelkopf vorgesehen ist. Der Ständer kann mittels einer Spiegelfußabdeckung verkleidet sein.

Der Spiegelkopf umfasst ein Außenrückblickspiegelgehäuse, welches unter anderem einen dem Spiegelfuß zugeordneten und mit diesem gelenkig verbundenen Grundträger beherbergt, einen solchen umfasst, oder von einem solchen umfasst wird

### Ständer und Grundträger bilden die tragenden Teile der

Außenrückblickspiegelanordnung. Sie können als Druckgussteile beispielsweise aus demselben Werkstoff hergestellt sein.

Der Spiegelkopf ist gegenüber dem Spiegelfuß um die Gelenkachse aus einer Betriebsstellung in eine Anklappstellung und umgekehrt verschwenkbar. Das Verschwenken des Spiegelkopfs gegenüber dem Spiegelfuß aus der Betriebsstellung in die Anklappstellung und umgekehrt um die Gelenkachse kann je nach Ausstattung eines Kraftfahrzeugs handbetrieben oder elektromotorisch betrieben erfolgen.

Unabhängig davon, ob ein handbetriebenes oder ein elektromotorisch betriebenes Verschwenken vorgesehen ist, muss ein Beiklappen des Spiegelkopfs bei äußerer Krafteinwirkung sichergestellt werden. Das Beiklappen muss hierbei sowohl in, als auch entgegen der Fahrtrichtung des Kraftfahrzeugs sichergestellt sein. Zu einer äußeren Krafteinwirkung kann es beispielsweise durch einen Kontakt mit einem anderen Verkehrsteilnehmer oder mit einem Objekt kommen.

Durch EP 1 755 923 B1 ist ein Verschwenkantrieb für eine Außenrückblickspiegelanordnung eines Kraftfahrzeugs bekannt. Der Verschwenkantrieb umfasst ein erstes Teil, der um eine Gelenkachse verschwenkbar mit einem zweiten Teil verbunden ist. Der Verschwenkantrieb umfasst darüber hinaus einen elektrischen Antrieb zum elektromotorisch betätigten Verschwenken der Teile relativ zueinander. Der Verschwenkantrieb umfasst außerdem eine Kupplung zwischen dem ersten und dem zweiten Teil. Bei äußerer Krafteinwirkung hebt die Kupplung eine zum elektromotorisch betätigten Verschwenken der beiden Teile relativ zueinander erforderliche drehmomentschlüssige Kopplung des elektrischen Antriebs mit den beiden Teilen auf, so dass die beiden Teile handbetrieben verschwenkt werden können. Bei erneutem elektromotorischen Antrieb stellt die Kupplung die drehmomentschlüssige Kopplung wieder her, so dass die beiden Teile wieder elektromotorisch betrieben verschwenkt werden können. Die Kupplung stellt so ein Beiklappen eines Spiegelkopfs in und entgegen der Fahrtrichtung eines Kraftfahrzeugs durch äußere Krafteinwirkung sicher, ohne den elektrischen Antrieb zu beschädigen. Jeweils eines der beiden Teile des Verschwenkantriebs kann mit dem Spiegelkopf einer Außenrückblickspiegelanordnung, vorzugsweise mit dessen Grundträger, das andere mit dem Spiegelfuß einer Außenrückblickspiegelanordnung, vorzugsweise mit dessen Ständer, verbunden werden. Die Gelenkachse des Verschwenkantriebs entspricht dabei der Gelenkachse der gelenkigen Verbindung zwischen Spiegelkopf und Spiegelfuß.

Das Außenrückblickspiegelgehäuse weist auf seiner in Betriebsstellung der Fahrtrichtung des Kraftfahrzeugs abgewandten Rückseite eine Öffnung auf, durch welche hindurch das Spiegelglas sichtbar ist und in welcher das Spiegelglas gegenüber dem Spiegelkopf um die beiden Schwenkachsen verstellbar angeordnet ist. Um eine Verstellbarkeit des Spiegelglases zu gewährleisten, ist allseitig zwischen Spiegelglas und den die Öffnung umgebenden Wandungen des Außenrückblickspiegelgehäuses ein Abstand eingehalten, so dass sich um das Spiegelglas umlaufend ein Spalt zu den die Öffnung umgebenden Wandungen des Außenrückblickspiegelgehäuses ergibt.

Auf dem Grundträger kann eine beispielsweise elektromotorisch betätigbare Verstellanordnung für ein Spiegelglas angeordnet sein. Die Verstellanordnung wirkt auf eine um die zwei verschiedenen und nicht parallel zueinander verlaufenden, beispielsweise einander schneidenden oder windschief zueinander angeordneten Schwenkachsen gegenüber dem Spiegelkopf verstellbar am Grundträger angeordnete Trägerplatte ein, auf der das Spiegelglas befestigt ist. Beispielsweise kann das Spiegelglas mittels einer Rast- und/oder Klebeverbindung auf der Trägerplatte montiert sein. Die Trägerplatte kann an der Verstellanordnung und/oder an dem Grundträger geführt und/oder gelagert sein. Der Begriff Trägerplatte bezeichnet hierbei einen Träger, der zumindest eine eben oder gewölbt ausgeführte, geschlossene oder gitterförmig unterbrochene, z.B. wabenförmige Trägerfläche aufweist, die geeignet ist, um darauf ein Spiegelglas beispielsweise mittels einer Klebeverbindung oder durch Einklipsen z.B. hinter am Umfang der Trägerfläche hervorstehende und vom Umfang aus gesehen nach Innen zur Mitte der Trägerfläche hin kragende Rastmittel zu befestigen.

Durch Verstellen des auf der Trägerplatte angeordneten Spiegelglases um die beiden Schwenkachsen gegenüber dem Spiegelkopf kann eine Einstellung der individuellen Verstelllage vorgenommen werden. Ist eine elektromotorisch betätigbare Verstellanordnung vorgesehen, sind die Verstellanordnung und die Trägerplatte häufig zu einem elektromotorischen Verstellantrieb zusammengefasst, welcher zumindest die Trägerplatte, Verbindungsmittel zur Befestigung am Grundträger, Führungsmittel zur Führung der Trägerplatte um die zwei Schwenkachsen, sowie zwei elektromotorische Antriebe, jeweils einen je Schwenkachse, einschließlich auf die Trägerplatte einwirkende, die Bewegungen der elektromotorischen Antriebe in Stellbewegungen für die Trägerplatte umwandelnde und auf die Trägerplatte übertragende Stellmittel umfasst.

Die Vornahme der Einstellung der individuellen Verstelllage vermittels einer elektromotorisch betätigbaren Verstellanordnung kann dabei manuell durch Tätigwerden des Fahrers des Kraftfahrzeugs vorgenommen werden, beispielsweise durch Betätigung von im Fahrzeuginnenraum untergebrachten Schaltern, Tastern, Reglern, oder automatisch, beispielsweise durch Erfassung von Sitzposition und/oder Größe und/oder Blickrichtung des Fahrers vermittels geeigneter Sensoren und Umwandlung der Sensorsignale in Steuerbefehle für die elektromotorisch betätigbare Verstellanordnung.

Vorteile der beschriebenen modernen Außenrückblickspiegelanordnungen sind neben einer Erfüllung der Ansprüche an Komfort und Sicherheitsanforderungen, dass sie eine Beherbergung zusätzlicher elektrischer Komponenten erlauben. So können beispielsweise im Spiegelkopf zumindest zum Teil vom Außenrückblickspiegelgehäuse beherbergt einzeln oder in Kombination miteinander eine Wiederholblinkleuchte, ein beheizbares Spiegelglas, ein elektrochromatisch abblendbares Spiegelglas, ein Erfassungs- und/oder Warnanzeigemodul für eine Fahrassistenzvorrichtung, wie etwa eine Totwinkelüberwachung, eine Spurverlasswarnung, eine Annäherungsüberwachung, oder dergleichen, oder eine Kombination hiervon untergebracht sein. Alternativ oder zusätzlich kann der Spiegelkopf wenigstens einen Sensor zur Erfassung von Fahr- und/oder Umgebungszuständen, wie beispielsweise Temperatur, Helligkeit, Verschmutzungsgrad, Beleuchtungssituation aufweisen, beispielsweise um das Spiegelglas automatisch zu beheizen und/oder z.B. elektrochromatisch abzublenden. Eine teilweise Unterbringung der genannten elektrischer Komponenten ist auch im Spiegelfuß, beispielsweise zumindest zum Teil von einer Spiegelfußabdeckung beherbergt, möglich.

Nachteilig an diesen modernen Außenrückblickspiegelanordnungen ist jedoch deren hoher konstruktiver Aufwand. Dieser ist bedingt durch Verwirklichung:
- eines Verschwenkens des Spiegelkopfs gegenüber dem Spiegelfuß aus der Betriebsstellung in die Anklappstellung und umgekehrt um die Gelenkachse, und
- eines Beiklappens zumindest des Spiegelkopfs bei äußerer Krafteinwirkung sowohl in, als auch entgegen der Fahrtrichtung des Kraftfahrzeugs, und
- eines Verstellens des Spiegelglases gegenüber dem Spiegelkopf um die zwei Schwenkachsen zur Vornahme einer Einstellung einer individuellen Verstelllage des Spiegelglases.

Dieser konstruktive Aufwand potenziert sich durch Verwirklichung einer elektromotorisch betätigbaren Vornahme zumindest des Verschwenkens des Spiegelkopfs gegenüber dem Spiegelfuß aus der Betriebsstellung in die Anklappstellung und umgekehrt um die Gelenkachse und/oder der Einstellung einer individuellen Verstelllage des Spiegelglases um die zwei Schwenkachsen.

Darüber hinaus erlauben die modernen Außenrückblickspiegelanordnungen eine nur sehr eingeschränkte Varianz im Hinblick auf Gestaltung bzw. Design.

### Eine Aufgabe der Erfindung ist die Entwicklung einer

Außenrückblickspiegelanordnung für ein Kraftfahrzeug, welche den heutigen Ansprüchen an Komfort und Sicherheitsanforderungen gerecht wird, und welche einen überschaubaren konstruktiven Aufwand aufweist.

Die Aufgabe wird gelöst mit den Merkmalen des unabhängigen Anspruchs.

Demnach sieht die Erfindung eine Außenrückblickspiegelanordnung mit einem zur kraftfahrzeugseitigen Anordnung vorgesehenen Spiegelfuß und einem an diesem angeordneten Spiegelkopf sowie einem im Spiegelkopf untergebrachten, gegenüber diesem starr und unverstellbar fest angeordneten Spiegelglas vor.

Mindestens eine gelenkige Verbindung ist zwischen Spiegelkopf und kraftfahrzeugseitiger Anordnung des Spiegelfußes vorgesehen. Die mindestens eine gelenkige Verbindung umfasst insgesamt zwei Gelenkachsen, deren Richtungsvektoren voneinander unabhängig sind.

Demnach sind eine erste Gelenkachse und eine zweite Gelenkachse zwischen Spiegelkopf und kraftfahrzeugseitiger Anordnung vorgesehen. Die Richtungsvektoren, welche die Lagen der Gelenkachsen im Raum definieren, sind voneinander unabhängig.

Die erste und die zweite Gelenkachse sind gemeinsam oder unabhängig voneinander:
- einer Vornahme eines Verschwenkens zumindest des Spiegelkopfs aus einer Betriebsstellung in eine Anklappstellung und umgekehrt,
- einem Beiklappen zumindest des Spiegelkopfs in und entgegen der Fahrtrichtung, sowie
- einer Einstellung einer individuellen Verstelllage zumindest des Spiegelglases abhängig beispielsweise von Sitzposition und Körpergröße eines Fahrers des Kraftfahrzeugs
   zugeordnet.

Ein erster elektromotorischer Verstellantrieb ist der ersten Gelenkachse zugeordnet. Ein zweiter elektromotorischer Verstellantrieb ist der zweiten Gelenkachse zugeordnet.

Die beiden elektromotorischen Verstellantriebe sind vorzugsweise unabhängig voneinander ansteuerbar.

Verlaufen beispielsweise weder die erste, noch die zweite Gelenkachse parallel zu einer gewünschten Verschwenk- bzw. Verstellachse kann eine Steuervorrichtung vorgesehen sein, die Steuerbefehle für den ersten elektromotorischen Verstellantrieb und für den zweiten elektromotorischen Verstellantrieb erzeugt, welche diese ausgehend von einem Verschwenken und/oder Verstellen um die zwei Gelenkachsen derart steuern, dass ein Verschwenken und/oder Verstellen um mindestens eine mit wenigstens einer gewünschten Verschwenk- bzw. Verstellachse identische imaginäre Achse ausgeführt wird. Mit anderen Worten veranlassen die Steuerbefehle den ersten elektromotorischen Verstellantrieb und den zweiten elektromotorischen Verstellantrieb zu Stellbewegungen, welche ein Verschwenken und/oder Verstellen zumindest des Spiegelkopfs mit dem Spiegelglas um die mit der gewünschten Verschwenk- bzw. Verstellachse identische imaginäre Achse bewirken.

Bei einer gewünschten Verschwenk- bzw. Verstellachse kann es sich beispielsweise um eine vertikal oder horizontal verlaufende Achse handeln. Es hat sich herausgestellt, dass beispielsweise die manuelle Vornahme einer Einstellung einer individuellen Verstelllage eines Spiegelglases einfacher und schneller ausführbar ist, wenn die Achsen, um die eine Verstellung vorgenommen wird, im Wesentlichen horizontal und vertikal verlaufen.

Alternativ oder zusätzlich kann eine der beiden Gelenkachsen bei kraftfahrzeugseitiger Anordnung der Außenrückblickspiegelanordnung im Wesentlichen annähernd horizontal verlaufen und/oder eine der beiden Gelenkachsen bei kraftfahrzeugseitiger Anordnung der
Außenrückblickspiegelanordnung im Wesentlichen annähernd vertikal verlaufen. Demgegenüber kann ein Verschwenken aus einer Betriebs- in eine Anklappstellung und umgekehrt und/oder ein Beiklappen sowohl in, als auch entgegen der Fahrtrichtung des Kraftfahrzeugs auch um eine von der Vertikalen oder Horizontalen verschiedenen Verschwenkachse vorteilhaft sein, beispielsweise wenn hierdurch zumindest der Spiegelkopf beigeklappt oder in Anklappstellung kraftfahrzeugseitig weniger absteht. Hierdurch wird die Verletzungsgefahr anderer Verkehrsteilnehmer verringert. Die Außenrückblickspiegelanordnung mit ihrer mindestens einen gelenkigen Verbindung und ihren insgesamt zwei Gelenkachsen kann ein Verschwenken aus einer Betriebs- in eine Anklappstellung und umgekehrt und/oder ein Beiklappen sowohl in, als auch entgegen der Fahrtrichtung des Kraftfahrzeugs um eine beliebige Verschwenkachse erlauben.

Beispielsweise kann zumindest der Spiegelkopf durch manuelle Betätigung einer im Fahrzeuginnenraum angeordneten Bedieneinrichtung vorzugsweise um einen definierten Schwenkwinkel aus einer Betriebsstellung um eine z.B. im Wesentlichen vertikal verlaufende Verschwenkachse in eine Abklappstellung und umgekehrt elektromotorisch verschwenkt werden, beispielsweise um bei abgestelltem Kraftfahrzeug eine Gefährdung anderer Verkehrsteilnehmer durch die ansonsten weit abstehende Außenrückblickspiegelanordnung zu vermeiden.

Beispielsweise kann zumindest der Spiegelkopf durch manuelle Betätigung einer im Fahrzeuginnenraum angeordneten Bedieneinrichtung vorzugsweise um jeweils einen definierten Schwenkwinkel um zwei einander beispielsweise in einem rechten Winkel schneidende Verstellachsen elektromotorisch verstellt werden, beispielsweise um eine von Sitzposition und Körpergröße abhängige Einstellung einer individuellen Verstelllage des Spiegelglases vorzunehmen.

Bei der Bedieneinrichtung kann es sich um einen oder mehrere Taster, Schalter, Regler handeln.

Alternativ zu einer manuellen Betätigung einer Bedieneinrichtung kann eine automatische elektromotorisch betätigte Vornahme einer von Sitzposition und Körpergröße abhängigen Einstellung einer individuellen Verstelllage des Spiegelglases vorgesehen sein. Hierzu kann eine Erfassung von Sitzposition und/oder Größe und/oder Blickrichtung des Fahrers vermittels eines oder mehrerer geeigneter Sensoren und Umwandlung der Sensorsignale in Steuerbefehle für die elektromotorischen Verstellantriebe vorgesehen sein.

Wenigstens einer der beiden elektromotorischen Verstellantriebe ist vorzugsweise zur kraftfahrzeugseitig starr verbundenen Anordnung vorgesehen. Ein kraftfahrzeugseitig starr angeordneter elektromotorischer Verstellantrieb ist beispielsweise nicht in einem gegenüber dem Spiegelfuß gelenkig angeordneten Spiegelkopf und nicht in einem kraftfahrzeugseitig gelenkig angeordneten Spiegelfuß untergebracht. Sich hierdurch ergebende Vorteile sind ein im Vergleich zum Stand der Technik deutlich und auch gegenüber den bisherigen Ausgestaltungen nochmals verringertes Gewicht der kraftfahrzeugseitig gelenkig angeordneten Teile der Außenrückblickspiegelanordnung. Hierdurch wird die Widerstandsfähigkeit der Außenrückblickspiegelanordnung gegenüber Vibrationen im Vergleich zum Stand der Technik nochmals wesentlich erhöht. Damit wird eine höchstmögliches Maß für die Güte des vermittels der Außenrückblickspiegelanordnung einsehbaren Bereichs der Fahrzeugumgebung frei von einer Beeinträchtigung durch Vibrationen des Spiegelglases, sei es hervorgerufen durch Fahrtwind, Fahrbahnunebenheiten oder Antriebsstrang erhalten und so die Verkehrssicherheit durch Verwendung der beschriebenen Außenrückblickspiegelanordnung nochmals erhöht.

Mindestens eine wenigstens eine Gelenkachse umfassende gelenkige Verbindung kann zur kraftfahrzeugseitigen Anordnung des Spiegelfußes vorgesehen sein. Je nachdem, ob die zur kraftfahrzeugseitigen Anordnung vorgesehene gelenkige Verbindung eine oder beide der insgesamt zwei Gelenkachsen umfasst, ist dadurch die erste Gelenkachse und/oder die zweite Gelenkachse kraftfahrzeugseitig vorgesehen bzw. kraftfahrzeugseitig festgelegt. Mindestens eine wenigstens eine Gelenkachse umfassende gelenkige Verbindung kann zur Anordnung zwischen Spiegelfuß und Spiegelkopf vorgesehen sein. Je nachdem, ob die zur Anordnung zwischen Spiegelfuß und Spiegelkopf vorgesehene gelenkige Verbindung eine oder beide der insgesamt zwei Gelenkachsen umfasst, ist dadurch die erste Gelenkachse und/oder die zweite Gelenkachse zwischen Spiegelfuß und Spiegelkopf vorgesehen bzw. festgelegt.

Dadurch können:
- die erste Gelenkachse kraftfahrzeugseitig vorgesehen bzw. kraftfahrzeugseitig festgelegt, und/oder
- die zweite Gelenkachse kraftfahrzeugseitig vorgesehen bzw.
   kraftfahrzeugseitig festgelegt, und/oder
- die erste Gelenkachse zwischen Spiegelfuß und Spiegelkopf vorgesehen bzw.
   festgelegt, und/oder
- die zweite Gelenkachse zwischen Spiegelfuß und Spiegelkopf vorgesehen bzw. festgelegt sein.

Ist mindestens eine gelenkige Verbindung zwischen Spiegelfuß und kraftfahrzeugseitiger Anordnung vorgesehen, so kann das Verschwenken bzw. Verstellen des Spiegelkopfs und des Spiegelfußes gemeinsam um die mindestens eine von dieser gelenkigen Verbindung umfasste Gelenkachse erfolgen.

Ist mindestens eine gelenkige Verbindung zwischen Spiegelkopf und Spiegelfuß vorgesehen, so kann das Verschwenken bzw. Verstellen des Spiegelkopfs gegenüber dem Spiegelfuß um die mindestens eine von dieser gelenkigen Verbindung umfasste Gelenkachse erfolgen.

Die erste Gelenkachse und die zweite Gelenkachse können einander schneiden. Besonders bevorzugt können sich die erste Gelenkachse und die zweite Gelenkachse in einem rechten Winkel schneiden.

Die erste Gelenkachse und die zweite Gelenkachse können windschief zueinander verlaufen.

Die mindestens eine gelenkige Verbindung kann durch ein Kugelgelenk verwirklicht sein. Dadurch können die erste Gelenkachse und die zweite Gelenkachse von einem Kugelgelenk gemeinsam umfasst sein.

Das Kugelgelenk kann zur kraftfahrzeugseitigen Anordnung des Spiegelfußes vorgesehen sein.

Das Kugelgelenk kann zur gelenkigen Verbindung zwischen Spiegelkopf und Spiegelfuß vorgesehen sein.

Zusätzlich zu den beiden elektromotorischen Verstellantrieben kann die Außenrückblickspiegelanordnung einzeln oder in Kombination miteinander beispielsweise:
- mindestens eine Sendeeinrichtung beispielsweise zur Fernbetätigung eines elektrischen Torantriebs, beispielsweise eines Hof- und/oder Garagentors, und/oder zur Fahrzeug-zu-Fahrzeug Kommunikation, und/oder
- wenigstens eine Wiederholblinkleuchte, und/oder
- ein beheizbares Spiegelglas, und/oder
- ein elektrochromatisch abblendbares Spiegelglas, und/oder
- zumindest ein Erfassungsmodul für eine Fahrassistenzvorrichtung, wie etwa eine Totwinkelüberwachung, eine Spurverlasswarnung, eine Annäherungsüberwachung oder dergleichen, und/oder
- mindestens ein vom Fahrzeuginnenraum durch ein Seitenfenster hindurch sichtbar angeordnetes Warnanzeigemodul für eine Fahrassistenzvorrichtung, wie etwa eine Totwinkelüberwachung, eine Spurverlasswarnung, eine Annäherungsüberwachung oder dergleichen, und/oder
- wenigstens einen Sensor zur Erfassung von Fahr- und/oder Umgebungszuständen, wie beispielsweise Temperatur, Helligkeit, Verschmutzungsgrad, Beleuchtungssituation, beispielsweise um das Spiegelglas automatisch zu beheizen und/oder z.B. elektrochromatisch abzublenden,
   als zusätzliche zumindest zum Teil von der Außenrückblickspiegelanordnung beherbergte elektrische Komponenten aufweisen. Die Aufzählung ist hierbei nicht als abschließend aufzufassen.

Vorteile der Erfindung gegenüber dem Stand der Technik ergeben sich unter anderem durch eine Verringerung des hohen konstruktiven Aufwands zur Verwirklichung einer elektromotorisch betätigten Vornahme des Verschwenkens aus einer Betriebs- in eine Anklappstellung und umgekehrt bei gleichzeitiger Sicherstellung eines Beiklappens in und entgegen der Fahrtrichtung sowie einer elektromotorisch betätigten Vornahme der individuellen Einstellung der Verstelllage des Spiegelglases, beispielsweise abhängig von Größe und Sitzposition des Fahrers des Kraftfahrzeugs. Die Verringerung des konstruktiven Aufwands ist unter anderem einhergehend mit einer Verringerung der zum Verschwenken, Beiklappen und zur Einstellung einer individuellen Verstelllage erforderlichen Achsen und mit der dadurch im Vergleich zum Stand der Technik verringerten Anzahl an benötigten elektromotorischen Verstellantrieben bzw.

### Stellgliedern. Darüber hinaus kann die erfindungsgemäße

Außenrückblickspiegelanordnung bei gleichzeitig verringertem konstruktiven Aufwand eine oder mehrere elektrische Komponenten beherbergen, welche einzeln für sich oder gemeinsam Ansprüche an Komfort und Sicherheitsanforderungen erfüllen können.

Weitere Vorteile gegenüber dem Stand der Technik ergeben sich beispielsweise durch eine besonders hohe Varianz im Hinblick auf mögliche Ausführungen, Gestaltung bzw. Design.

Weitere Merkmale der Erfindung ergeben sich aus den Ansprüchen, der Beschreibung und den Zeichnungen.

Ausführungsbeispiele der Erfindung sind nachfolgend anhand der Zeichnung näher erläutert. Darin bezeichnen gleiche Bezugszeichen gleiche oder gleich wirkende Elemente. Der Übersicht halber sind nur Bezugszeichen in den einzelnen Zeichnungen dargestellt, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:
- Fig. 1: ein erstes Ausführungsbeispiel einer Außenrückblickspiegelanordnung für ein Kraftfahrzeug in teilweise geschnittener Vorderansicht.
- Fig. 2: die Außenrückblickspiegelanordnung aus Fig. 1 in teilweise geschnittener Seitenansicht.
- Fig. 3: ein zweites Ausführungsbeispiel einer Außenrückblickspiegelanordnung für ein Kraftfahrzeug in teilweise geschnittener Vorderansicht.
- Fig. 4: die Außenrückblickspiegelanordnung aus Fig. 3 in teilweise geschnittener Seitenansicht.

- Fig. 5: ein drittes Ausführungsbeispiel einer Außenrückblickspiegelanordnung für ein Kraftfahrzeug in teilweise geschnittener Vorderansicht.
- Fig. 6: ein viertes Ausführungsbeispiel einer Außenrückblickspiegelanordnung für ein Kraftfahrzeug in teilweise geschnittener Vorderansicht.
- Fig. 7: ein fünftes Ausführungsbeispiel einer Außenrückblickspiegelanordnung für ein Kraftfahrzeug in teilweise geschnittener Vorderansicht.
- Fig. 8: ein sechstes Ausführungsbeispiel einer Außenrückblickspiegelanordnung für ein Kraftfahrzeug in teilweise geschnittener Vorderansicht.
- Fig. 9: ein siebtes Ausführungsbeispiel einer Außenrückblickspiegelanordnung für ein Kraftfahrzeug in einer Rückansicht.

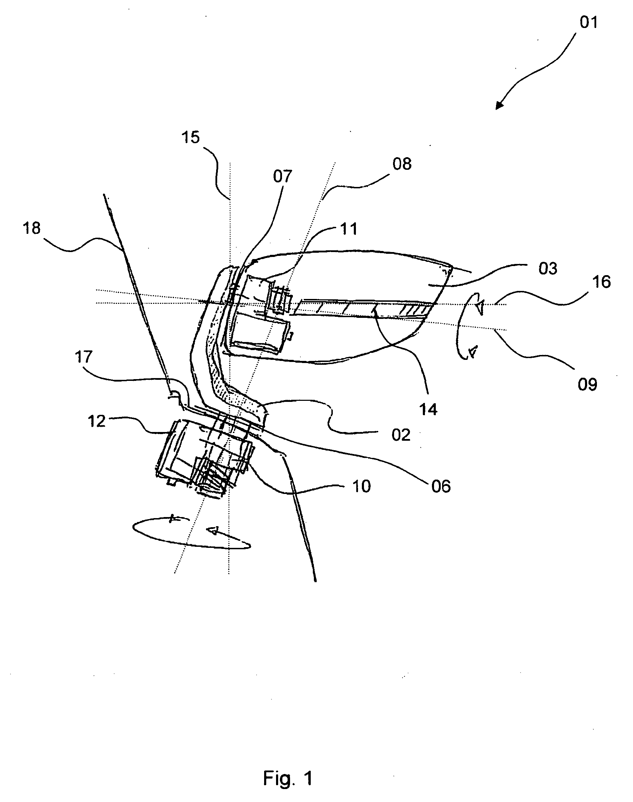

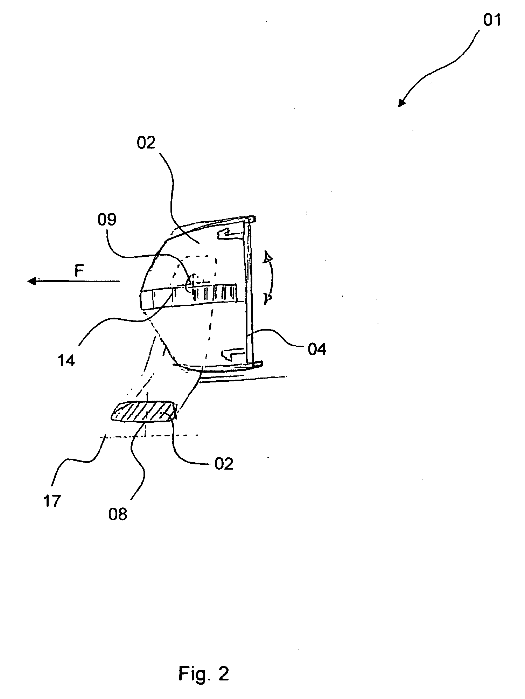

### Eine in den Fig. 1 bis Fig. 9 ganz oder in Teilen dargestellte

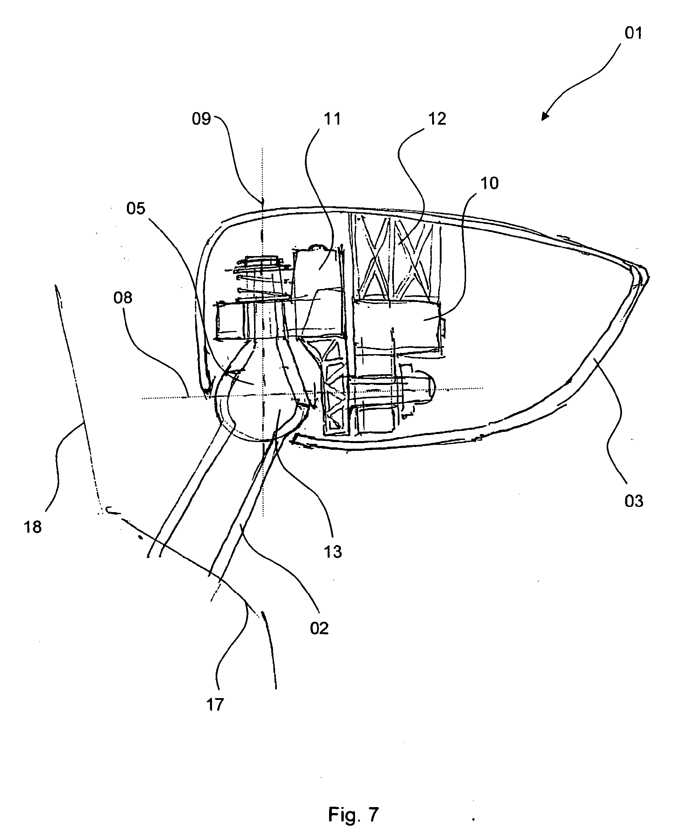

Außenrückblickspiegelanordnung 01 für ein Kraftfahrzeug besteht im Wesentlichen aus einem zur kraftfahrzeugseitigen Anordnung vorgesehenen Spiegelfuß 02 und einem an diesem angeordneten Spiegelkopf 03 sowie einem im Spiegelkopf 03 untergebrachten, gegenüber diesem starr und unverstellbar fest angeordneten Spiegelglas 04. Mindestens eine gelenkige Verbindung 05 (Fig. 7, Fig. 8, Fig. 9), 06, 07 (Fig. 1, Fig. 3, Fig. 5, Fig. 6) ist zwischen Spiegelkopf 03 und kraftfahrzeugseitiger Anordnung des Spiegelfußes 02 vorgesehen.

Die mindestens eine gelenkige Verbindung 05, 06, 07 umfasst insgesamt zwei Gelenkachsen 08, 09, deren Richtungsvektoren, welche die Lagen der beiden Gelenkachsen im Raum definieren, voneinander unabhängig sind.

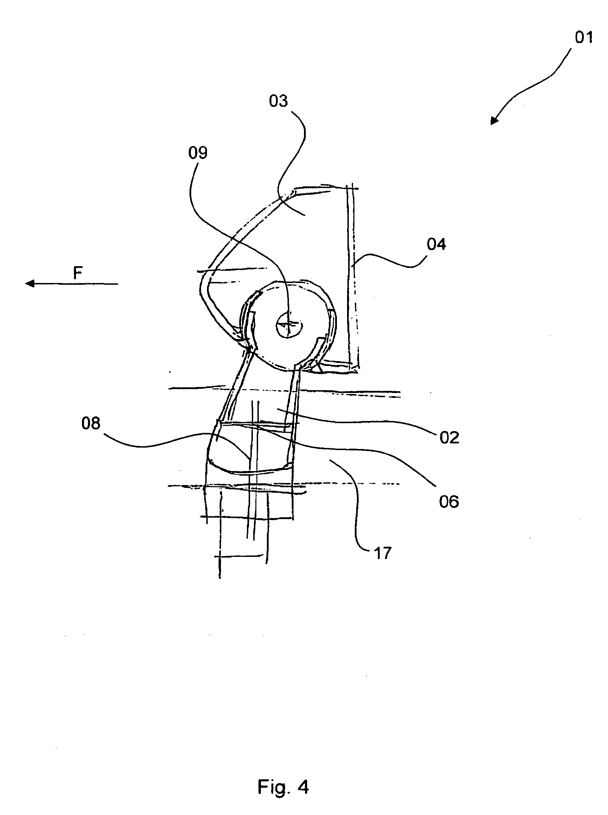

Die beiden Gelenkachsen 08, 09 sind jeweils gemeinsam und/oder unabhängig voneinander:
- einer Vornahme eines Verschwenkens zumindest des Spiegelkopfs 03 aus einer Betriebsstellung in eine Anklappstellung und umgekehrt,
- einem Beiklappen zumindest des Spiegelkopfs 03 in und entgegen der in den Fig. 1 und Fig. 4 durch den Pfeil F angedeuteten Fahrtrichtung, sowie
- einer Einstellung einer individuellen Verstelllage zumindest des Spiegelglases 04 abhängig beispielsweise von Sitzposition und Körpergröße eines Fahrers des Kraftfahrzeugs
   zugeordnet.

Einer ersten Gelenkachse 08 der beiden Gelenkachsen 08, 09 ist ein erster elektromotorischer Verstellantrieb 10 zugeordnet. Einer zweiten Gelenkachse 09 der beiden Gelenkachsen 08, 09 ist ein zweiter elektromotorischer Verstellantrieb 11 zugeordnet.

Die Außenrückblickspiegelanordnung 01 weist unter dem Begriff Spiegelglas 04 zusammengefasst mindestens eine reflektierende bzw. verspiegelte Fläche auf, welche von einem Fahrer des Kraftfahrzeugs vom Fahrzeuginnenraum beispielsweise durch ein Seitenfenster hindurch einsehbar ist und Einblick in einen oder mehrere Bereiche einer Fahrzeugumgebung gewährt, in welche dieser bei auf den Fahrbahnverlauf gerichtetem Blickfeld von dessen Sitzplatz aus sonst keine Einsicht hätte.

Beispielsweise zur Vermeidung einer Blendung durch rückwärtige Lichtquellen kann eine elektrochromatische Abblendung des Spiegelglases 04 vorgesehen sein. Hierfür kann das Spiegelglas 04 als ein elektrochromatisch abblendbares Spiegelglas ausgeführt sein.

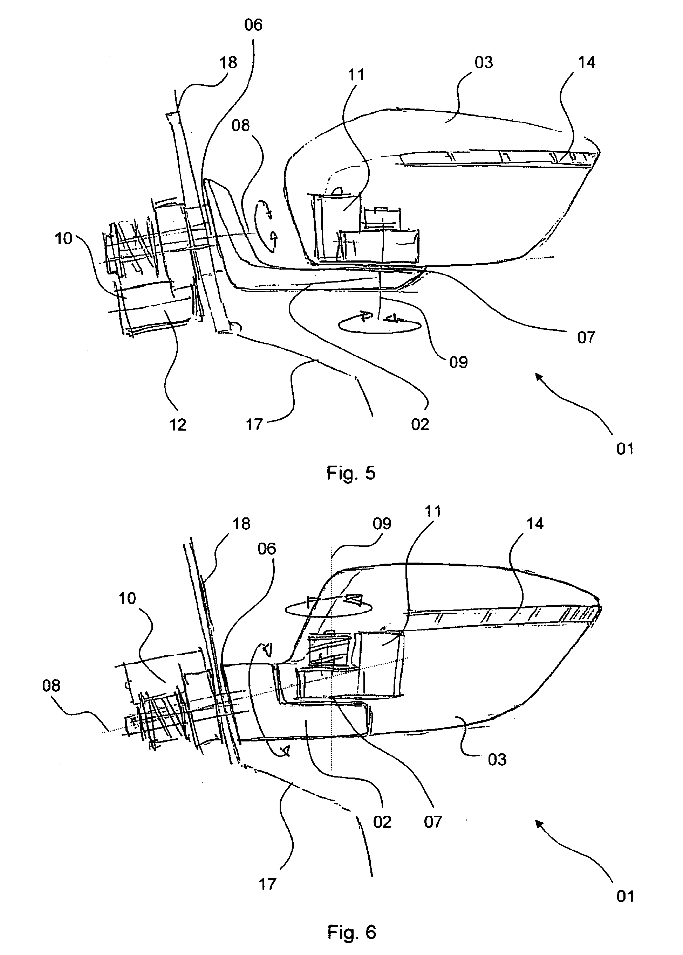

Die erste Gelenkachse 08 und die zweite Gelenkachse 09 können einander wie in den Fig. 5 bis Fig. 9 dargestellt schneiden. Besonders bevorzugt schneiden sich die erste Gelenkachse 08 und die zweite Gelenkachse 09 dabei in einem rechten Winkel, wie bei den in den Fig. 7 bis Fig. 9 dargestellten

Außenrückblickspiegelanordnungen 01 vorgesehen.

Alternativ können die erste Gelenkachse 08 und die zweite Gelenkachse 09 wie in den Fig. 1 bis Fig. 4 dargestellt windschief zueinander verlaufen.

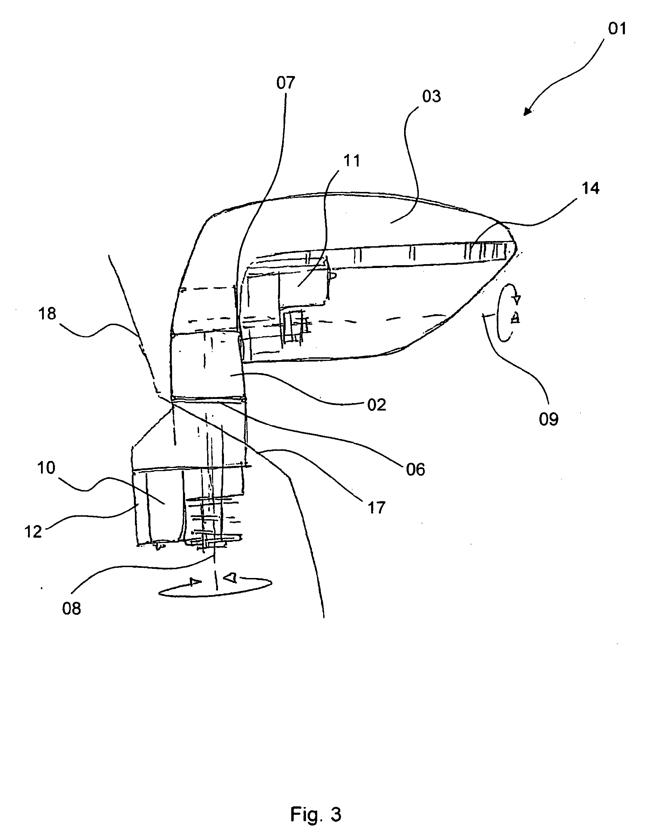

### Eine der beiden Gelenkachsen 08, 09 kann wie in den Fig. 3, Fig. 4, Fig. 7 und Fig. 8 dargestellt bei kraftfahrzeugseitiger Anordnung der

Außenrückblickspiegelanordnung 01 im Wesentlichen annähernd vertikal verlaufen.

Alternativ oder zusätzlich kann eine der beiden Gelenkachsen 08, 09 wie in den Fig. 3, Fig. 4, Fig. 7 und Fig. 8 dargestellt bei kraftfahrzeugseitiger Anordnung der Außenrückblickspiegelanordnung 01 im Wesentlichen annähernd horizontal verlaufen.

Ebenfalls ist es möglich, dass sich wie in den Fig. 1, Fig. 5 und Fig. 6 beispielsweise die Lage der zweiten Gelenkachse 09 im Raum bei einem Verschwenken bzw. Verstellen um die erste Gelenkachse 08 verändert.

Um den verschiedenen möglichen Lagen der Gelenkachsen 08, 09 gerecht zu werden, sind die beiden elektromotorischen Verstellantriebe 10, 11 vorzugsweise unabhängig voneinander ansteuerbar.

Gegebenenfalls kann eine Steuervorrichtung 12 (Fig. 1, Fig. 3, Fig. 7) vorgesehen sein, die Steuerbefehle für den ersten elektromotorischen Verstellantrieb 10 und für den zweiten elektromotorischen Verstellantrieb 11 erzeugt, welche diese ausgehend von einem Verschwenken und/oder Verstellen um die zwei Gelenkachsen 08, 09 derart steuern, dass ein Verschwenken und/oder Verstellen um mindestens eine mit wenigstens einer gewünschten Verschwenk- bzw. Verstellachse identische, beispielsweise horizontal oder vertikal verlaufende imaginäre Achse 15, 16 (Fig. 1) ausgeführt wird.

Bei den in den Fig. 1, Fig. 2, Fig. 3, Fig. 4, Fig. 5 und Fig. 6 dargestellten Außenrückblickspiegelanordnungen 01 ist die die erste Gelenkachse 08 umfassende gelenkige Verbindung 06 zur kraftfahrzeugseitigen Anordnung des Spiegelfußes 02 vorgesehen. Darüber hinaus ist bei diesen Außenrückblickspiegelanordnungen 01 die die zweite Gelenkachse 09 umfassende gelenkige Verbindung 07 zwischen Spiegelfuß 02 und Spiegelkopf 03 vorgesehen.

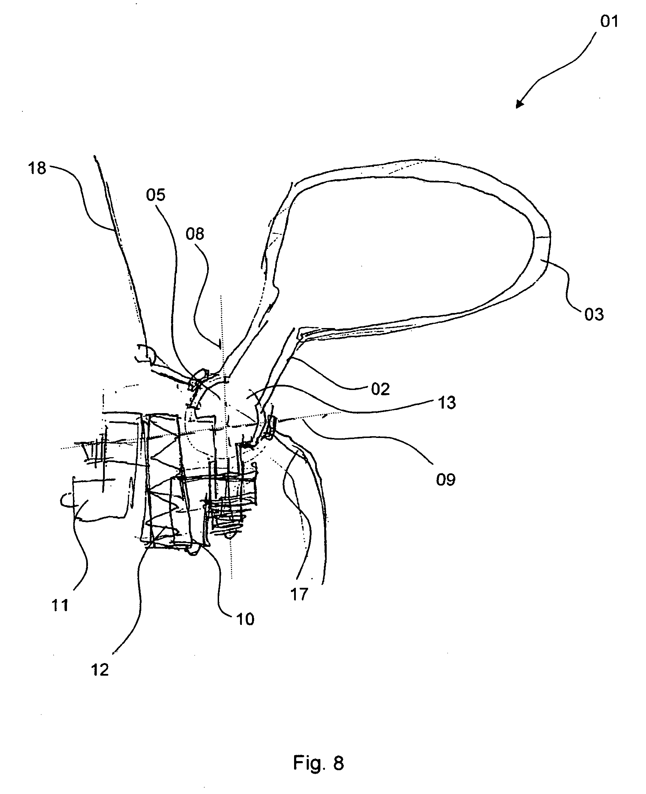

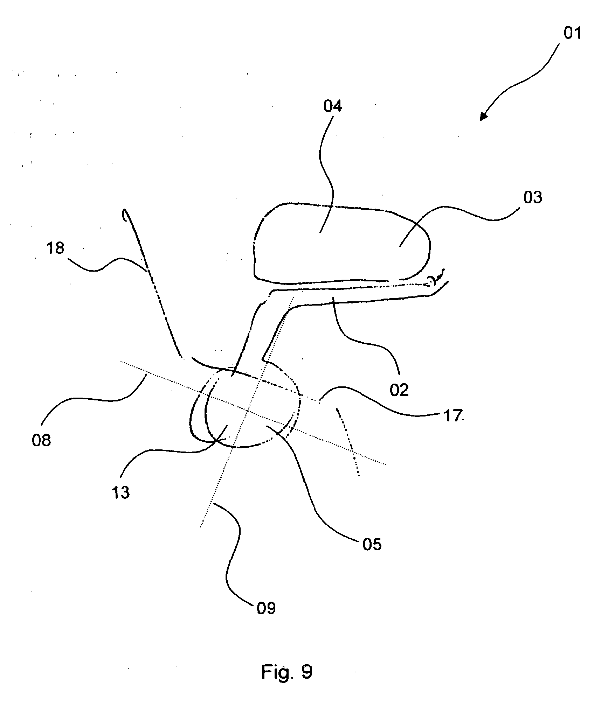

Bei den in den Fig. 8 und Fig. 9 dargestellten Außenrückblickspiegelanordnungen 01 ist die sowohl die erste Gelenkachse 08, als auch die zweite Gelenkachse 09 umfassende gelenkige Verbindung 05 zur kraftfahrzeugseitigen Anordnung des Spiegelfußes 02 vorgesehen.

### Demgegenüber ist bei der in Fig. 7 dargestellten

Außenrückblickspiegelanordnung 01 die sowohl die erste Gelenkachse 08, als auch die zweite Gelenkachse 09 umfassende gelenkige Verbindung 05 zwischen Spiegelfuß 02 und Spiegelkopf 03 vorgesehen.

Je nach Ausgestaltung der Außenrückblickspiegelanordnung 01 kann wenigstens einer der beiden elektromotorischen Verstellantriebe 10, 11 kraftfahrzeugseitig starr verbundenen angeordnet sein. Bei den in den Fig. 1, Fig. 3, Fig. Fig. 5 und Fig. 6 dargestellten Außenrückblickspiegelanordnungen 01 handelt es sich hierbei um den der ersten Gelenkachse 08 zugeordneten ersten elektrischen Verstellantrieb 10.

Die mindestens eine gelenkige Verbindung 05 kann wie in den Fig. 7, Fig. 8 und Fig. 9 dargestellt durch ein Kugelgelenk 13 verwirklicht sein. Dies hat den Vorteil, dass beide Gelenkachsen 08, 09 von der gelenkigen Verbindung 05 umfasst sind bzw. durch diese gebildet sind. Ein weiterer Vorteil ergibt sich dadurch, dass sowohl der der ersten Gelenkachse 08 zugeordnete erste elektromotorische Verstellantrieb 10, als auch der der zweiten Gelenkachse 09 zugeordnete zweite elektromotorische Verstellantrieb 10 kraftfahrzeugseitig starr verbundenen angeordnet sein kann, wie in Fig. 8 dargestellt.

Das Kugelgelenk 13 kann wie in den Fig. 8 und 9 zur kraftfahrzeugseitigen Anordnung des Spiegelfußes 02 vorgesehen sein, oder wie in Fig. 7 dargestellt zur Herstellung der gelenkigen Verbindung 05 zwischen Spiegelkopf 03 und Spiegelfuß 02. In Fig. 7 ist dabei der Spiegelfuß 02 kraftfahrzeugseitig starr angeordnet bzw. zur starren kraftfahrzeugseitigen Anordnung vorgesehen.

Die Außenrückblickspiegelanordnung 01 kann wie in den Fig. 1, Fig. 2, Fig. 3, Fig. 5 und Fig. 6 dargestellt eine Wiederholblinkleuchte 14 beispielsweise im Spiegelkopf 03 beherbergen.

Die Außenrückblickspiegelanordnungen 01 können je nach Ausgestaltung bevorzugt zur kraftfahrzeugseitigen Anordnung an einer Türbrüstung 17 (Fig. 1 bis Fig. 4 und Fig. 7 bis Fig. 9) aufstehend oder beispielsweise von einer im Wesentlichen vertikalen Fahrzeugoberfläche 18 (Fig. 5 und Fig. 6) abstehend vorgesehen sein.

Die Außenrückblickspiegelanordnungen 01 können eine stehende oder hängende Anordnung des Spiegelkopfs 03 am Spiegelfuß vorsehen.

Eine besondere Ausgestaltungsmöglichkeit zeigt die in Fig. 9 dargestellte Außenrückblickspiegelanordnung. Bei dieser kann der Spiegelkopf 03 vollständig vom Spiegelglas 04 umfasst sein, ein Teil des Spiegelglases 04 sein, oder dieses umfassen.

Die Erfindung ist insbesondere im Bereich der Herstellung von Außenrückblickspiegelanordnungen für Kraftfahrzeuge gewerblich anwendbar.

### Bezugszeichenliste

- 01: Außenrückblickspiegelanordnung
- 02: Spiegelfuß
- 03: Spiegelkopf
- 04: Spiegelglas
- 05: gelenkige Verbindung
- 06: gelenkige Verbindung
- 07: gelenkige Verbindung
- 08: erste Gelenkachse
- 09: zweite Gelenkachse
- 10: erster elektromotorischer Verstellantrieb
- 11: zweiter elektromotorischer Verstellantrieb
- 12: Steuervorrichtung
- 13: Kugelgelenk
- 14: Wiederholblinkleuchte
- 15: imaginäre Achse
- 16: imaginäre Achse
- 17: Türbrüstung
- 18: Fahrzeugoberfläche

- F: Fahrtrichtung

## Patentansprüche

1. Außenrückblickspiegelanordnung (01) für ein Kraftfahrzeug mit einem zur kraftfahrzeugseitigen Anordnung vorgesehenen Spiegelfuß (02) und einem an diesem angeordneten Spiegelkopf (03) sowie einem im Spiegelkopf (03) untergebrachten, gegenüber diesem starr und unverstellbar fest angeordneten Spiegelglas (04), wobei mindestens eine gelenkige Verbindung (05, 06, 07) zwischen Spiegelkopf (03) und kraftfahrzeugseitiger Anordnung des Spiegelfußes (02) vorgesehen ist, welche insgesamt zwei Gelenkachsen (08, 09) umfasst, deren Richtungsvektoren voneinander unabhängig sind, und wobei die beiden Gelenkachsen (08, 09) gemeinsam und/oder unabhängig voneinander:
- einer Vornahme eines Verschwenkens zumindest des Spiegelkopfs (03) aus einer Betriebsstellung in eine Anklappstellung und umgekehrt,
- einem Beiklappen zumindest des Spiegelkopfs (03) in und entgegen der Fahrtrichtung (F), sowie
- einer Einstellung einer individuellen Verstelllage zumindest des Spiegelglases (04) durch Verstellen des Spiegelkopfes (03) abhängig beispielsweise von Sitzposition und Körpergröße eines Fahrers des Kraftfahrzeugs zugeordnet sind,
sowie mit einem einer ersten Gelenkachse (08) der beiden Gelenkachsen (08, 09) zugeordneten ersten elektromotorischen Verstellantrieb (10) und mit einem einer zweiten Gelenkachse (09) der beiden Gelenkachsen (08, 09) zugeordneten zweiten elektromotorischen Verstellantrieb (11).

2. Außenrückblickspiegelanordnung nach Anspruch 1,
**dadurch gekennzeichnet,**
**dass** die beiden elektromotorischen Verstellantriebe (10, 11) unabhängig voneinander ansteuerbar sind.

3. Außenrückblickspiegelanordnung nach Anspruch 1 oder 2,
**gekennzeichnet durch**
eine Steuervorrichtung (12), die Steuerbefehle für den ersten elektromotorischen Verstellantrieb (10) und für den zweiten elektromotorischen Verstellantrieb (11) erzeugt, welche diese ausgehend von einem Verschwenken und/oder Verstellen um die zwei Gelenkachsen (08, 09) derart steuern, dass ein Verschwenken und/oder Verstellen um mindestens eine mit wenigstens einer gewünschten Verschwenk- bzw. Verstellachse identische imaginäre Achse (15, 16) ausgeführt wird.

4. Außenrückblickspiegelanordnung nach Anspruch 3,
**dadurch gekennzeichnet,**
**dass** es sich bei der gewünschten Verschwenk- bzw. Verstellachse um eine vertikal oder horizontal verlaufende Achse (15, 16) handelt.

5. Außenrückblickspiegelanordnung nach einem der vorhergehenden Ansprüche,
**dadurch gekennzeichnet,**
**dass** wenigstens einer der beiden elektromotorischen Verstellantriebe (10, 11) zur kraftfahrzeugseitig starr verbundenen Anordnung vorgesehen ist.

6. Außenrückblickspiegelanordnung nach einem der vorhergehenden Ansprüche,
**dadurch gekennzeichnet,**
**dass** mindestens eine wenigstens eine Gelenkachse (08, 09) umfassende gelenkige Verbindung (05, 06, 07) zur kraftfahrzeugseitigen Anordnung des Spiegelfußes (02) vorgesehen ist.

7. Außenrückblickspiegelanordnung nach einem der vorhergehenden Ansprüche,
**dadurch gekennzeichnet,**
**dass** mindestens eine wenigstens eine Gelenkachse (08, 09) umfassende gelenkige Verbindung (05, 06, 07) zwischen Spiegelfuß (02) und Spiegelkopf (03) vorgesehen ist.

8. Außenrückblickspiegelanordnung nach einem der vorhergehenden Ansprüche,
**dadurch gekennzeichnet,**
**dass** eine der beiden Gelenkachsen (08, 09) bei kraftfahrzeugseitiger Anordnung der Außenrückblickspiegelanordnung (01) im Wesentlichen horizontal verläuft.

9. Außenrückblickspiegelanordnung nach einem der vorhergehenden Ansprüche,
**dadurch gekennzeichnet,**
**dass** eine der beiden Gelenkachsen (08, 09) bei kraftfahrzeugseitiger Anordnung der Außenrückblickspiegelanordnung (01) im Wesentlichen vertikal verläuft.

10. Außenrückblickspiegelanordnung nach einem der vorhergehenden Ansprüche,
**dadurch gekennzeichnet,**
**dass** die erste Gelenkachse (08) und die zweite Gelenkachse (09) einander schneiden.

11. Außenrückblickspiegelanordnung nach einem der Ansprüche 1 bis 9,
**dadurch gekennzeichnet,**
**dass** die erste Gelenkachse (08) und die zweite Gelenkachse (09) windschief zueinander verlaufen.

12. Außenrückblickspiegelanordnung nach einem der vorhergehenden Ansprüche,
**dadurch gekennzeichnet,**
**dass** die mindestens eine gelenkige Verbindung (05) durch ein Kugelgelenk (13) verwirklicht ist.

13. Außenrückblickspiegelanordnung nach Anspruch 12,
**dadurch gekennzeichnet,**
**dass** das Kugelgelenk (13) zur kraftfahrzeugseitigen Anordnung des Spiegelfußes (02) vorgesehen ist.

14. Außenrückblickspiegelanordnung nach Anspruch 12,
**dadurch gekennzeichnet,**
**dass** das Kugelgelenk (13) zur Herstellung einer gelenkigen Verbindung (05) zwischen Spiegelkopf (03) und Spiegelfuß (02) vorgesehen ist.

15. Außenrückblickspiegelanordnung nach einem der vorhergehenden Ansprüche,
**dadurch gekennzeichnet,**
**dass** die Außenrückblickspiegelanordnung (01) zusätzlich:
- mindestens eine Sendeeinrichtung, und/oder
- wenigstens eine Wiederholblinkleuchte (14), und/oder
- ein beheizbares Spiegelglas (04), und/oder
- ein elektrochromatisch abblendbares Spiegelglas (04), und/oder
- zumindest ein Erfassungsmodul für eine Fahrassistenzvorrichtung, und/oder
- mindestens ein vom Fahrzeuginnenraum durch ein Seitenfenster hindurch sichtbar angeordnetes Warnanzeigemodul für eine Fahrassistenzvorrichtung, und/oder
- wenigstens einen Sensor zur Erfassung von Fahr- und/oder Umgebungszuständen
umfasst.

## Claims

1. External rear-view mirror assembly (01) for a motor vehicle having a mirror foot (02) provided for arrangement on the motor vehicle and a mirror head (03) arranged on the mirror foot (03) as well as a mirror glass (04) accommodated in the mirror head (03) and arranged rigidly and fixed nonadjustably with respect thereto, wherein at least one articulation (05, 06, 07) is provided between the mirror head (03) and the arrangement of the mirror foot (02) on the motor vehicle, said articulation comprising a total of two articulation axes (08, 09), the direction vectors of said articulation axes being independent of each other, and wherein the two articulation axes (08, 09) are associated, jointly and/or independently of each other, to:
• swiveling at least the mirror head (03) from an operating position to a swung-in position and vice versa,
• swinging-in at least the mirror head (03) in and against the direction of motion (F), as well as
• adjusting an individual adjusting position of at least the mirror glass (04) by adjusting the mirror head (03) depending on, e.g., the seating position and the height of a driver of the motor vehicle,
as well as having a first adjusting drive (10) driven by an electric motor and associated to a first articulation axis (08) of the two articulation axes (08, 09) and having a second adjusting drive (11) driven by an electric motor and associated to a second articulation axis (09) of the two articulation axes (08, 09).

2. External rear-view mirror assembly according to claim 1,
**characterized in**
**that** the two adjusting drives (10, 11) driven by electric motors can be driven independently of each other.

3. External rear-view mirror assembly according to claim 1 or 2,
**characterized by**
a control device (12) that generates control commands for the first adjusting drive (10) driven by an electric motor and for the second adjusting drive (11) driven by an electric motor, said control commands controlling the two adjusting drives, on the basis of swiveling and/or adjusting about the two articulation axes (08, 09), in such a manner that swiveling and/or adjusting are/is performed about at least one imaginary axis (15, 16) that is identical with at least one desired swiveling/adjusting axis.

4. External rear-view mirror assembly according to claim 3,
**characterized in**
**that** the desired swiveling/adjusting axis is a vertical or horizontal axis (15, 16).

5. External rear-view mirror assembly according to any one of the preceding claims,
**characterized in**
**that** at least one of the two adjusting drives (10, 11) driven by electric motors is provided for rigidly connected arrangement on the motor vehicle.

6. External rear-view mirror assembly according to any one of the preceding claims,
**characterized in**
**that** at least one articulation (05, 06, 07) comprising at least one articulation axis (08, 09) is provided for the arrangement of the mirror foot (02) on the motor vehicle.

7. External rear-view mirror assembly according to any one of the preceding claims,
**characterized in**
**that** at least one articulation (05, 06, 07) comprising at least one articulation axis (08, 09) is provided between the mirror foot (02) and the mirror head (03).

8. External rear-view mirror assembly according to any one of the preceding claims,
**characterized in**
**that** one of the two articulation axes (08, 09) extends essentially horizontally when the external rear-view mirror assembly (01) is arranged on the motor vehicle.

9. External rear-view mirror assembly according to any one of the preceding claims,
**characterized in**
**that** one of the two articulation axes (08, 09) extends essentially vertically when the external rear-view mirror assembly (01) is arranged on the motor vehicle.

10. External rear-view mirror assembly according to any one of the preceding claims,
**characterized in**
**that** the first articulation axis (08) and the second articulation axis (09) intersect.

11. External rear-view mirror assembly according to any one of claims 1 to 9,
**characterized in**
**that** the first articulation axis (08) and the second articulation axis (09) extend skewly to each other.

12. External rear-view mirror assembly according to any one of the preceding claims,
**characterized in**
**that** the at least one articulation (05) is realized in the form of a ball-and-socket joint (13).

13. External rear-view mirror assembly according to claim 12,
**characterized in**
**that** the ball-and-socket joint (13) is provided for the arrangement of the mirror foot (02) on the motor vehicle.

14. External rear-view mirror assembly according to claim 12,
**characterized in**
**that** the ball-and-socket joint (13) is provided for establishing an articulation (05) between the mirror head (03) and the mirror foot (02).

15. External rear-view mirror assembly according to any one of the preceding claims,
**characterized in**
**that** the external rear-view mirror assembly (01) additionally comprises:
• at least one transmitting device, and/or
• at least one turn signal repeater (14), and/or
• a heatable mirror glass (04), and/or
• an electrochromatically dimmable mirror glass (04), and/or
• at least one detection module for a driver assistance device, and/or
• at least one warning display module for a driver assistance device, said warning display module being arranged such that it is visible from the passenger compartment of the vehicle through a side window, and/or
• at least one sensor for the detection of driving states and/or states of the surroundings.

## Revendications

1. Ensemble formant rétroviseur extérieur (01) destiné à un véhicule automobile, ayant une embase de rétroviseur (02) prévue pour être agencée sur le côté du véhicule automobile, et une tête de rétroviseur (03) agencée sur celle-ci, ainsi qu'un miroir de rétroviseur (04) reçu dans la tête de rétroviseur (03), agencé de manière fixe et de manière rigide contre celle-ci, dans lequel au moins une liaison articulée (05, 06, 07) est prévue entre la tête de rétroviseur (03) et l'agencement sur le côté du véhicule automobile de l'embase de rétroviseur (02), qui comporte en tout deux axes d'articulation (08, 09) dont les vecteurs directionnels sont indépendants, et dans lequel les deux axes d'articulation (08, 09), ensemble et/ou séparément l'un de l'autre, sont agencés pour :
- faire pivoter au moins la tête de rétroviseur (03) à partir d'une position de fonctionnement jusqu'à une position rabattue, et inversement,
- replier au moins la tête de rétroviseur (03) dans la direction de déplacement (F), et à l'encontre de celle-ci, et
- régler une position de réglage individuelle d'au moins le miroir de rétroviseur (04), en fonction par exemple de la position d'assise et de la taille d'un conducteur du véhicule automobile,
et ayant un premier dispositif de réglage électromoteur (10) associé à un premier axe d'articulation (08) des deux axes d'articulation (08, 09), et un second dispositif de réglage électromoteur (11) associé à un second axe d'articulation (09) des deux axes d'articulation (08, 09).

2. Ensemble formant rétroviseur extérieur selon la revendication 1,
**caractérisé en ce que**
les deux dispositif de réglage électromoteurs (10, 11) peuvent être commandés séparément l'un de l'autre.

3. Ensemble formant rétroviseur extérieur selon la revendication 1 ou 2,
**caractérisé en ce que**
un dispositif de commande (12), qui génère des instructions de commande pour le premier dispositif de réglage électromoteur (10) et le second dispositif de réglage électromoteur (11), les commandant sur la base d'un pivotement et/ou d'un réglage autour des deux axes d'articulation (08, 09), va fournir un pivotement ou un réglage sur un axe imaginaire (15,16) identique à au moins un axe de pivotement ou un axe de réglage souhaité.

4. Ensemble formant rétroviseur extérieur selon la revendication 3,
**caractérisé en ce que**
l'axe de pivotement ou de l'axe de réglage souhaité est un axe s'étendant verticalement ou horizontalement (15, 16).

5. Ensemble formant rétroviseur extérieur selon l'une quelconque des revendications précédentes,
**caractérisé en ce que**
au moins un des deux dispositifs de réglage électromoteurs (10, 11) est prévu pour un agencement relié de manière rigide sur le côté du véhicule automobile.

6. Ensemble formant rétroviseur extérieur selon l'une quelconque des revendications précédentes,
**caractérisé en ce que**
au moins une liaison articulée (05, 06, 07) comprenant au moins un axe d'articulation (08, 09) est prévue, pour un agencement sur le côté du véhicule automobile de l'embase de rétroviseur (02).

7. Ensemble formant rétroviseur extérieur selon l'une quelconque des revendications précédentes,
**caractérisé en ce que**
au moins une liaison articulée (05, 06, 07) comprenant au moins un axe d'articulation (08, 09) est prévue entre l'embase de rétroviseur (02) et la tête de rétroviseur (03).

8. Ensemble formant rétroviseur extérieur selon l'une quelconque des revendications précédentes,
**caractérisé en ce que**
l'un des deux axes d'articulation (08, 09) s'étend sensiblement horizontalement au moyen d'un agencement sur le côté du véhicule automobile de l'ensemble formant rétroviseur extérieur (01).

9. Ensemble formant rétroviseur extérieur selon l'une quelconque des revendications précédentes,
**caractérisé en ce que**
l'un des deux axes d'articulation (08, 09) s'étend sensiblement verticalement au moyen d'un agencement sur le côté du véhicule automobile de l'ensemble formant rétroviseur extérieur (01).

10. Ensemble formant rétroviseur extérieur selon l'une quelconque des revendications précédentes,
**caractérisé en ce que**
le premier axe d'articulation (08) et le second axe d'articulation (09) se croisent l'un l'autre.

11. Ensemble formant rétroviseur extérieur selon l'une quelconque des revendications 1 à 9, **caractérisé en ce que**
le premier axe d'articulation (08) et le second axe d'articulation (09) s'étendent en étant inclinés l'un par rapport à l'autre.

12. Ensemble formant rétroviseur extérieur selon l'une quelconque des revendications précédentes,
**caractérisé en ce que**
la au moins une liaison articulée (05) est réalisée sous la forme d'une liaison à rotule (13).

13. Ensemble formant rétroviseur extérieur selon la revendication 12,
**caractérisé en ce que**
la liaison à rotule (13) est prévue pour l'agencement sur le côté du véhicule automobile de l'embase de rétroviseur (02).

14. Ensemble formant rétroviseur extérieur selon la revendication 12,
**caractérisé en ce que**
la liaison à rotule (13) est prévue entre la tête de rétroviseur (03) et l'embase de rétroviseur (02) pour la mise en oeuvre d'une liaison articulée (05).

15. Ensemble formant rétroviseur extérieur selon l'une quelconque des revendications précédentes,
**caractérisé en ce que**
l'ensemble formant rétroviseur extérieur (01) comporte de plus :
- au moins un dispositif d'émission, et/ou
- au moins un clignotant continu (14), et/ou
- un miroir de rétroviseur pouvant être chauffé (04), et/ou
- un miroir de rétroviseur antireflet électrochromatique (04), et/ou
- au moins un module de détection pour un dispositif d'aide à la conduite, et/ou
- au moins un module d'avertissement agencé de manière à être visible de l'intérieur depuis un habitacle de véhicule automobile à travers une fenêtre latérale pour un dispositif d'aide à la conduite, et/ou
- au moins un capteur pour détecter des conditions de conduite et/ou des conditions ambiantes.
